(19) **Europäisches Patentamt / European Patent Office / Office européen des brevets**

(11) **EP 2 424 321 B1**

(12) **EUROPEAN PATENT SPECIFICATION**

(45) Date of publication and mention
of the grant of the patent:
**13.01.2016 Bulletin 2016/02**

(51) Int Cl.:
***H04W 48/20*** (2009.01)

(21) Application number: **09844792.3**

(86) International application number:
**PCT/CN2009/071935**

(22) Date of filing: **22.05.2009**

(87) International publication number:
**WO 2010/133040 (25.11.2010 Gazette 2010/47)**

(54) **USER EQUIPMENT AND ACCESSING METHOD THEREOF**

BENUTZERGERÄT UND ZUGRIFFSVERFAHREN DAFÜR

EQUIPEMENT UTILISATEUR ET SON PROCÉDÉ D'ACCÈS

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**29.02.2012 Bulletin 2012/09**

(73) Proprietor: **Huawei Technologies Co., Ltd.
Longgang District
Shenzhen, Guangdong 518129 (CN)**

(72) Inventor: **ZHAO, Hongxia
Shenzhen
Guangdong 518129 (CN)**

(74) Representative: **Thun, Clemens et al
Mitscherlich PartmbB
Patent- und Rechtsanwälte
Sonnenstraße 33
80331 München (DE)**

(56) References cited:
**EP-A1- 1 631 112        EP-A2- 2 051 458
WO-A1-03/015442      WO-A1-2007/062933
WO-A1-2008/027627   WO-A2-2007/121414
CN-A- 1 271 902        CN-A- 1 938 996
CN-A- 101 421 995    US-A1- 2008 101 306**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE TECHNOLOGY**

The present invention relates to the field of wireless network communications, and particularly to a user equipment and an access method thereof.

**BACKGROUND OF THE INVENTION**

In a conventional cellular communication system, the coverage of a base station usually varies from 2 km to 5 km. If only the line-of-sight (LOS) transmission is adopted, due to the existence of tall buildings, shadow fading of the channels would be very apparent, and the quality and speed of the signals would be lowered. In the existing technology, a relay station, is installed, and an information channel having a high speed and a small fading is established between a mobile station and the base station, such that the communication quality is greatly improved. A relay station installed on a building or in a street is called a fixed relay station.

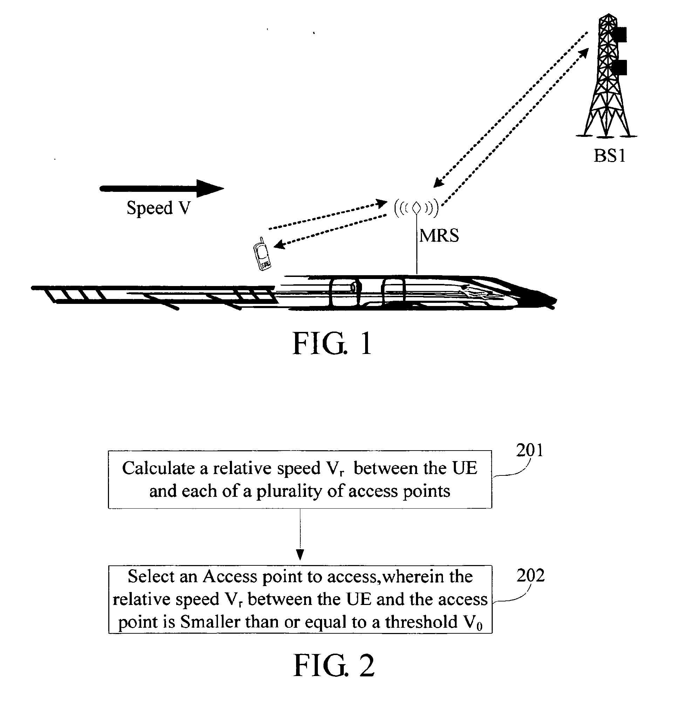

A mobile relay station (MRS) is a relay station installed on a movable carrier, for example, a transportation means. A relay station is installed on the vehicle, and when a User Equipment (UE) is on the transportation means, the UE establishes a connection with a ground base station through the relay station, so as to solve the problem of coverage in the transportation means, and reduce the energy consumption of the user equipment UE. The relay station is called mobile relay station (MRS). FIG 1 is a schematic view of a communication system involving the MRS of the prior art.

The cellular communication system of the prior art as described above performs a handover by using a delay and margin method.

$$E_{PCCPCH\_Ncell}\text{-}E_{PCCPCH\_Serving}> \textit{Margin}$$

$E_{PCCPCH\_Ncell}$ represents a signal intensity of a primary common control physical channel (PCCPCH) of a target cell measured by the UE, $E_{PCCPCH\_Serving}$ represents a signal intensity of a PCCPCH of a current serving cell measured by the UE, and *Margin* represents a handover margin.

When a time period T, within which the above equation $E_{PCCPCH\_Ncell}\text{-}E_{PCCPCH\_Serving}> \textit{Margin}$ is satisfied, and T is longer than a threshold value T0 (delay), the UE is handed over from the serving cell to the target cell.

The inventor of the present invention found that the prior art at least has the following problem. Since the prior art is proposed for the conventional cellular network, during the process that the mobile relay station (MRS) starts to move from a static state, a relative movement may occur to a group of UEs accessing the MRS, and the UEs need to be handed over in time. However, due to the delay effect, the group of UEs may not be handed over in time.

WO 2007/121414 A2 is regarded as the closest prior art and relates to performing various operations based on a distance-related function associated with two or more devices. For example, an association procedure for two or more devices may be based on one or more determined distances. A distance-related function may take various form including, for example, a distance between devices, two or more distances between devices, a rate of change in a relative distance between devices, relative acceleration between devices, or some combination of two or more of the these distance-related functions.

**SUMMARY OF THE INVENTION**

The present invention is directed to a user equipment and an access method thereof By using the method, the user equipment can be timely handed over between a mobile access point and a fixed access point.

In an embodiment, the present invention provides an access method for a user equipment, which includes the following steps.

Calculating a relative speed $V_r$ between a UE and each of a plurality of access points; and selecting an access point to access, wherein the relative speed $V_r$ between the UE and the access point is smaller than or equal to a threshold $V_0$; and

if the $V_r$ between the UE and each access point is greater than the threshold $V_0$, selecting, by the UE, an access point having the minimum $V_r$ to access.

In an embodiment, the present invention further provides a UE, which includes a calculating unit and an access unit.

The calculating unit is configured to calculate a relative speed between the UE andeach of a plurality of access points. The access unit is configured to select an access point to access if the relative speed between the UE and the

access point $V_r$ is smaller than or equal to a threshold $V_0$; and if the relative speeds $V_r$ between the UE and all the access points are all greater than the threshold $V_0$, the access unit is further configured to select an access point having the minimum $V_r$ to access.

In an embodiment, the present invention further provides a computer readable storage medium storing program code thereon for use by a user equipment, UE, to access a wireless network, the program code including instructions for executing a method. Wherein the method includes:

calculating a relative speed Vr between the UE and each of a plurality of access points; and

selecting an access point to access, wherein the relative speed Vr between the UE and the access point is smaller than or equal to a threshold $V_0$; and

if the Vr between the UE and each access point is greater than the threshold V0, selecting an access point having the minimum Vr to access.

Through the embodiments of the present invention, the user equipment can be handed over in time between a mobile access point and a fixed access point, and the utilization ratio of wireless resources is optimized and handover is reduced by properly selecting the access point.

## BRIEF DESCRIPTION OF THE DRAWINGS

The accompanying drawings are intended for better understanding of the present invention and constitute part of this application rather than limitation of the present invention.

FIG 1 is a schematic view of a system including an MRS in the prior art;

FIG 2 is a flow chart of a UE access method according to an embodiment of the present invention;

FIG 3 is a flow chart of an access method of a UE in a non-connected state according to an embodiment of the present invention;

FIG 4 is a flow chart of a method for calculating relative speeds by the UE using a GPS according to an embodiment of the present invention;

FIG 5 is a block diagram of a UE according to an embodiment of the present invention; and

FIG 6 is a block diagram of a UE according to another embodiment of the present inventio

## DETAILED DESCRIPTION OF THE EMBODIMENTS

For better understanding of the objective, technical solution and merits of the present invention, the following describes the present invention in detail with reference to the accompanying drawings. The exemplary embodiments of the present invention and description thereof are intended for interpreting rather than limiting the scope of the present invention.

The present invention provides a UE and an access method thereof, which are described in detail below with reference to the accompanying drawings.

FIG 2 is a schematic flow chart of a UE access method according to an embodiment of the present invention.

Step 201, a UE calculates a relative speed $V_r$ between the UE and each of a plurality of access points.

Step 202, the UE selects an access point to access if the relative speed $V_r$ is smaller than or equal to a threshold $V_0$.

In an embodiment of the present invention, before the Step 201, the method may further include that the UE receives broadcast information of each access point, and acquires an indication of whether to perform a handover or an access decision and the $V_0$ from the broadcast information, or the UE adopts a preset indication of whether to perform a handover or an access decision and the preset $V_0$ stored in the UE. Preferably, according to the $V_0$, the UE can be indicated to perform the access or the handover by using the method of the embodiment.

In an embodiment of the present invention, the broadcast information is sent by a mobile access point or a fixed access point, or is sent by the mobile access point and the fixed access point together.

In an embodiment of the present invention, each access point acquires the $V_0$ according to an average speed of all the UEs in each access point coverage, and the average speed of the UEs may be the walking speed of a user.

In an embodiment of the present invention, $V_0 = \alpha \overline{V}$, in which $\overline{V}$ is the average speed of the UEs, and usually $1 < \alpha < 2$.

In an embodiment of the present invention, the calculating the relative speed $V_r$ between the UE and each access point include the UE calculating Doppler frequency shift of signal sent by each access point, and obtains the $V_r$ according to the Doppler frequency shift.

In an embodiment of the present invention, the UE calculates the relative speed $V_r$ according to speed information collected by a GPS of the UE and speed information collected by a GPS of each access point.

In an embodiment of the present invention, Step 202 further includes that if the relative speeds $V_r$ between the UE and each one of a plurality of access points is smaller than or equal to the threshold $V_0$, the UE selects the access point having a maximum signal intensity from the plurality of access points to access.

In an embodiment of the present invention, Step 202 further includes that if the relative speeds $V_r$ between the UE and each access point is greater than the threshold $V_0$, the UE selects the access point having the minimum $V_r$ to access.

In an embodiment of the present invention, Step 202 further includes that if the UE and a serving access point are in a connected state, and the $V_r$ between the UE and the serving access point in the connected state is greater than the threshold $V_0$, the UE is handed over from the serving access point in the connected state to a neighboring access point having a $V_r$ smaller than or equal to the threshold $V_0$.

In an embodiment of the present invention, when the UE is handed over from the serving access point to the neighboring access point having a $V_r$ smaller than or equal to the threshold $V_0$, the method further includes that if the relative speeds $V_r$ between the UE and each neighboring access point is smaller than or equal to the threshold $V_0$, the UE selects the access point having a maximum signal intensity from the plurality of neighboring access points and is handed over to the access point; and if the relative speeds $V_r$ between the UE and each access point is greater than the threshold $V_0$, the UE is handed over by using a delay and margin method, so as to prevent a ping-pong handover.

In an embodiment of the present invention, Step 202 further includes that when the UE selects the access point having the $V_r$ smaller than or equal to the threshold $V_0$ and accesses the access point, if the UE and a serving access point are in a connected state and the $V_r$ between the UE and the serving access point is smaller than or equal to the threshold $V_0$, the UE is handed over by using the delay and margin method, so as to prevent a ping-pong handover.

Through the above embodiments, the UE accesses the access point according to the relative speeds between the UE and the access points. When an access point starts moving, a ground terminal is handed over from the moving access point in time, and an on-vehicle terminal is handed over to the moving access point in time. It is ensured that the ground terminal does not access the moving access point as possible, and during the movement, the on-vehicle terminal does not access the ground fixed access point or other neighboring mobile access points as possible. In a region with dense users, for example, a platform, when a relative move does not occur between the serving access point and the terminal, it is ensured that a ping-pong handover of the user terminal is avoided. In the embodiments of the present invention, a base station and an RS are both called access point (access point, AP). The mobile access point is usually located on a mobile transportation means, for example, a high-speed train, and the fixed access point is located on a static transportation means or a fixed building. In the embodiments of the present invention, the access points having the received signal intensity satisfying the UE access demand are called the access points, the access points serving the UE are called the serving access points, and the remaining access points except for the serving access points are the neighboring access points of the UE.

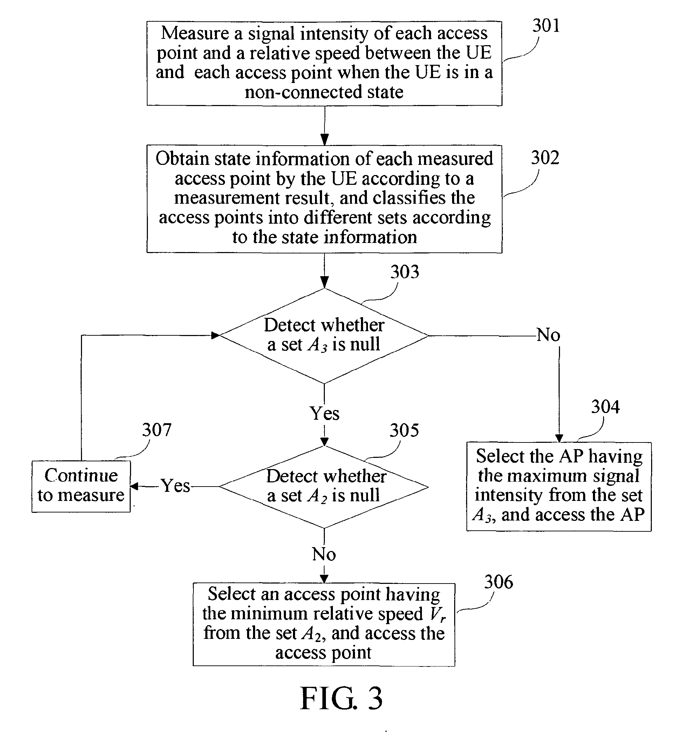

FIG 3 is a schematic flow chart of an embodiment of an access method of a UE in a non-connected state according to the present invention.

Step 301, the UE measures a signal intensity of each access point and a relative speed between the UE and each access point when the UE is in the non-connected state.

Step 302, the UE obtains state information of each measured access point based on Table 1 according to a measurement result, and classifies the access points into different sets based on Table 2 according to the state information.

It is assumed that a logic variable *IE* is configured to indicate whether the signal intensity of each measured access point satisfies a UE access demand, and *IE=1* indicates that the signal intensity satisfies the UE access demand, that is, the UE can access the access point, while *IE=0* indicates that the signal intensity does not satisfy the UE access demand.

It is assumed that a logic variable *IV* is configured to indicate whether the relative speed $V_r$ between the UE and each measured access point satisfies a condition $V_r \leq V_0$, and *IV=1* indicates that the relative speed satisfies the condition, while *IV=0* indicates that the relative speed does not satisfy the condition.

## Table 1 States of measured access points

| State | IE | IV |
|---|---|---|
| $S_0$ | 0 | 0 |
| $S_1$ | 0 | 1 |
| $S_2$ | 1 | 0 |
| $S_3$ | 1 | 1 |

In order to facilitate the UE to select the appropriate access point, the measured access points are divided into different access priorities according to the states, and the access priority is represented by a variable P. It is assumed that the greater the value of P is, the higher the access priority is, that is, the UE preferentially selects the access point having a great value of P and accesses the access point. P=0 indicates that the UE cannot access the access point, and the access priorities corresponding to the states are shown in Table 2.

Table 2 Sets of access points in different states and definitions of different access priorities

| | $S_0$ | $S_1$ | $S_2$ | $S_3$ |
|---|---|---|---|---|
| **Access Priority$^P$** | 0 | 0 | 1 | 2 |
| **Set** | | | $A_2$ | $A_3$ |

It is assumed that $A_i$ represents a set of all the access points in an $S_i$ state, and according to the above definitions of the access priorities of the access points in the different states, in this embodiment, the sets of the access points selected and initially accessed by the UE are $A_2$ and $A_3$.
The access points in the different states are classified into the different sets.

Step 303, when the UE needs to establish a connection with a network, the UE detects whether the set $A_3$ is null according to the definitions of the access priorities in Table 2, and if it is not null, Step 304 is performed; otherwise, Step 305 is performed.

Step 304, the UE selects an access point having the maximum signal intensity from the set $A_3$, and accesses the access point.

Step 305, the UE detects whether the set $A_2$ is null, and if it is not null, Step 306 is performed; otherwise, Step 307 is performed.

Step 306, the UE selects an access point having the minimum relative speed from the set $A_2$, and accesses the access point.

In Step 307, the UE continues to measure, so as to find the access point that is appropriate for the UE to access.

A handover decision method for a UE in a connected state is described in the following.
When the UE detects a relative move between the UE and the serving access point, the UE selects another neighboring access point satisfying the access demand and being relatively static ($V_r \leq V_0$) as a target handover access point as soon as possible, and is quickly handed over to the target access point with no need to wait for a signal intensity margin and a measurement time to satisfy the condition, as long as the target access point satisfies the UE access demand. In other situations, when $V_r \leq V_0$, only when the signal intensity of the measured target handover access point and the signal intensity of the serving access point satisfy the condition that the measurement time $T \geq T_0$, in which $T_0$ is a delay, the UE is handed over by using the delay and margin method, so as to prevent a ping-pong handover. For example, only when $E_d > E_s + Margin$ is satisfied, the handover process is started, in which $E_d$ is the signal intensity of the target handover access point, $E_s$ is the signal intensity of the serving access point, and *Margin* is a handover margin.

It is assumed that a logic variable $IV_s$ is configured to indicate whether the relative speed $V_r$ between the UE and the serving access point satisfies a condition $V_r \leq V_0$, and $IV_s = 1$ indicates that the relative speed satisfies the condition, while $IV_s = 0$ indicates that the relative speed does not satisfy the condition.

It is assumed that a logic variable $IV_d$ is configured to indicate whether the relative speed $V_r$ between the UE and the neighboring measured access point satisfies the condition $V_r \leq V_0$, and $IV_d = 1$ indicates that the relative speed satisfies the condition, while $IV_d = 0$ indicates that the relative speed does not satisfy the condition.

It is assumed that a logic variable $IE_m$ is configured to indicate whether the signal intensity $E_d$ of the measured neighboring access point and the signal intensity Es of the serving access point satisfy the condition $E_d > Es + Margin$, and if yes, $IE_m = 1$; otherwise, $IE_m = 0$.

It is assumed that a logic variable $IE_d$ is configured to indicate whether the signal intensity of the calculated neighboring access point satisfies the UE access condition, and if yes, $IE_d = 1$; otherwise, $IE_d = 0$.

It is assumed that a logic variable $IT$ is configured to indicate whether the signal intensity of the measured neighboring access point satisfies the UE access demand in a time length T and Tsatisfies the condition $T \geq T_0$, and if yes, $IT = 1$; otherwise, $IT = 0$.

Therefore, a logic function $F_h(IV_s, IV_d, IE_d, IE_m, IT)$ may be configured to indicate whether the UE needs to be handed over, $F_h = 1$ indicates that the terminal needs to be handed over from the serving access point to the measured access point, and $F_h = 0$ indicates that the terminal does not need to be handed over. Table 3 gives an expression of the function $F_h$.

### Table 3 Expression of handover decision function $F_h$

| $IV_sIV_d$ \ $IE_dIE_mIT$ | 000 | 001 | **011** | **010** | 110 | 111 | 101 | 100 |
|---|---|---|---|---|---|---|---|---|
| 00 | 0 | 0 | X | X | 0 | 1 | 0 | 0 |
| 01 | 0 | 0 | X | X | 1 | 1 | 1 | 1 |
| 11 | 0 | 0 | X | X | 0 | 1 | 0 | 0 |
| 10 | 0 | 0 | X | X | 0 | 1 | 0 | 0 |

According to Table 3, the expression of the logic function $F_h$ of deciding whether the handover is performed by the UE is obtained.

$$F_h = \overline{IV_s}\, IV_d IE_d IE_m \overline{IT} + \overline{IV_s}\, IV_d IE_d IE_m IT + \overline{IV_s}\, IV_d IE_d \overline{IE_m} IT + \overline{IV_s}\, IV_d IE_d \overline{IE_m}\, \overline{IT}$$

$$+ \overline{IV_s}\, \overline{IV_d}\, IE_d IE_m IT + IV_s IV_d IE_d IE_m IT + IV_s \overline{IV_d}\, IE_d IE_m IT \qquad (1)$$

The expression is simplified based on a Karnaugh map of the logic function $F_h$, and an expression of the logic function of performing the handover decision by the UE may be obtained.

$$F_h = IE_d IE_m IT + \overline{IV_s}\, IV_d IE_d \qquad (2)$$

If the UE is handed over, the UE selects the access point having the maximum signal intensity from one or more access points satisfying the demand and accesses the access point.

It is impossible that a value of $IE_d IE_m IT$ is 011 and 010, that is, the state, in which the signal intensity $E_d$ of the measured access point does not satisfy the UE access demand but satisfies the condition $E_d > E_s + Margin$, does not exist. The impossible state is represented by X, as shown in Table 3.

When the signal intensity of the measured access point does not satisfy the UE access demand at all, the measured access point may not be selected as the target handover access point of the handover, that is, $IE_d = 0$, and the terminal is not handed over to the measured access point, such that $F_h = 0$, as shown in a first column and a second column in Table 3.

A quick handover process is described in the following.

When the relative speed $V_r$ between the UE and the serving access point does not satisfy the condition $V_r \leq V_0$, that is, $IV_s = 0$, if the signal intensity of the measured access point satisfies the access demand, and the relative speed $V_r'$ between the UE and the measured access point satisfies the condition $V_r' \leq V_0$, that is, $IV_d = 1$ and $IE_d = 1$, the UE is handed over to the measured neighboring access point, as shown in a fifth column to an eighth column of a second row in Table 3. If a plurality of measured access points satisfies the condition, the UE selects the most appropriate target handover access point according to the priorities defined in Table 4 in the following.

Table 4    Access priorities corresponding to states of access points when $IV_s IV_d$ is 01

| $IE_d IE_m IT$ | 110 | 111 | 101 | 100 |
|---|---|---|---|---|
| **Priority** | 3 | 4 | 2 | 1 |

The priority having the maximum value represents the highest priority. Therefore, when the value of $IV_s IV_d$ is 01 and a plurality of measured access points satisfies the demand of serving as the target access point to hand over, the UE firstly selects the measured access point having the value of $IE_d IE_m IT$ being 111 as the target access point to hand over, and if the measured access point in a high priority state does not exist, the UE selects the access points having the value of $IE_d IE_m IT$ being 110, 101, 100 as the target access point to hand over in sequence. When a plurality of measured access points having the same value of $IE_d IE_m IT$ exists, the UE selects the access point having the maximum value of $E_d$ as the target access point to handover.

The process that the UE is handed over by using the delay and margin method is described in the following.

When the serving access point does not move relative to the UE, that is, the relative speed $V_r$ satisfies the condition $V \leq V_0$, the UE is handed over by using the delay and margin method. In this manner, only when the relative speed $V_r'$ between the measured access point and the UE satisfies the condition $V_r \leq V_0$, and the signal intensity of the measured access point is higher than the signal intensity of the current serving access point and reaches the threshold represented by *Margin* for a time period longer than To, the UE considers to be handed over from the current serving access point to the measured access point, so as to better prevent a ping-pong handover. In this case, $IV_s = 1$, and only when the value of $IE_d IE_m IT$ is 111, the UE is handed over, as shown in a third row and a fourth row of a sixth column in Table 3. In this scenario, if a plurality of measured access points satisfies the condition of serving as the target handover access point, the UE selects the most appropriate target handover access point according to the access priorities defined in Table 5, in which the priority having the great value represents the high priority. If pluralities of measured neighboring access points satisfy the condition are the same state, the UE selects the access point having the maximum value of $E_d$ as the target access point.

Table 5    Access priorities corresponding to states of access points when $IV_s IE_d IE_m IT$

is 1111

| $IV_d$ | 0 | 1 |
|---|---|---|
| **Priority** | 1 | 2 |

When neither of the relative speed between the serving access point and the UE and the relative speed between the target access point and the UE satisfy the condition $V_r \leq V_0$, the two access points are relatively not stable, and the UE considers to be handed over by using the delay and margin method, which is the situation shown in Table 3 with the value of $IV_s IV_d IE_d IE_m IT$ being 00111. If a plurality of measured access points satisfies the condition, the UE selects the access point having the maximum value of $E_d$ as the target handover access point.

An embodiment of calculating the reference speed $V_0$ by the access point is described in the following.

The reference speed $V_0$ is decided in consideration of a statistic average speed $\overline{V}$ of the UEs in a cell coverage, and the value of $V_0$ is set based on the average speed, for example, as shown in a formula in the following:

$$V_0 = \alpha \overline{V} \text{ , in which } \alpha_{\min} < \alpha < \alpha_{\max}.$$

When $\alpha > \alpha_{\min}$, unnecessarily handover is prevented from occurring to the terminal as possible, and when $\alpha < \alpha_{\max}$, it is mainly considered that the terminal can be handed over in time after the access point moves.

In a preferred embodiment, it can set that $\alpha_{\min}=1$ and $\alpha_{\max}=2$, that is $1 < \alpha < 2$.

In another embodiment, $\alpha$ may be fixedly set or dynamically adjusted, for example, when people are crowded and the users are dense at the station at noon, $\alpha$ may be adjusted smaller, and when the users are few in the early morning, $\alpha$ may be adjusted greater.

In another embodiment, a variation range of the walking speed of the user is limited, and usually a common walking speed is 4 km/h, a marching speed is 5 km/h, and a rapid marching speed is 6 km/h, which are much lower than a train speed. For the peak traffic moment of the train, $V_0 = 6$ km/h may be directly set, and the access point broadcasts the $V_0$ to the UE or the $V_0$ is set in the UE.

An embodiment of the method for calculating the relative speed between the UE and each access point by using a Doppler frequency shift method according to the present invention is described in the following.

Based on a currently mature Doppler frequency shift detection method, a basic principle of the method is described in the following formula, that is, the Doppler frequency shift of the access point is in direct proportion to the relative speed.

$$f_d = \frac{v_r}{c} f_0 \qquad (1)$$

$f_d$ is the Doppler frequency shift, $v_r$ is the relative speed between the terminal and the access point, and $f_0$ is an emission frequency of the access point.

A light velocity $c$ and $f_0$ are already known to the UE, such that when the Doppler frequency shift is detected, the relative speed is calculated according to the following formula:

$$v_r = \frac{f_d}{f_0} c \qquad (2)$$

The detection of the Doppler frequency shift belongs to a typical signal detection technology, and many detection methods can be used, which are related to specific signal characteristics, for example, signal modulation modes, signal working frequency bands, and broadcast environments. For the details of the detection, reference can be made to related documents.

Standard organizations represented by the 3rd Generation Partnership Project (3GPP) have already compiled the GPS speed measuring function into a standard as one of the capabilities of the UE. The GPS speed measuring function method provided by the access point is similar to that of the terminal. The GPS-based speed measuring method is supported by plenty of mature technologies, for example, single-point speed measurement, differential speed measurement, and location differential smooth speed measurement may be applied, and the present invention is not limited thereto.

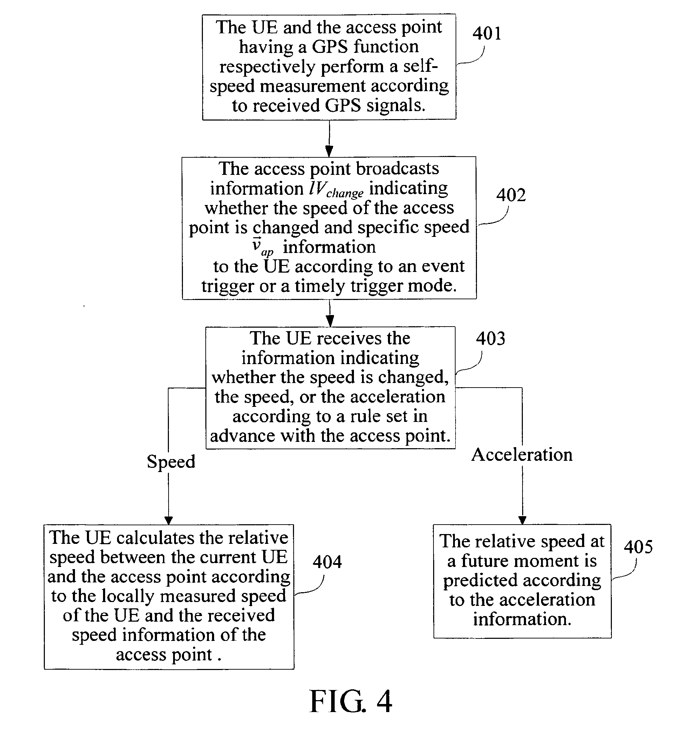

FIG 4 is a flow chart of an embodiment of a method for calculating relative speeds by the UE using a GPS according to the present invention.

Step 401, the UE and the access point having a GPS function respectively perform a self-speed measurement according to received GPS signals.

Step 402, the access point broadcasts information $IV_{change}$ indicating whether the speed of the access point is changed and specific speed information $\vec{v}_{ap}$ to the UE according to an event trigger or a timely trigger mode. In addition, the access point may selectively broadcast acceleration information $\vec{a}_{ap}$ measured by the access point itself to the UE.

Step 403, the UE receives the information $IV_{change}$ indicating whether the speed is changed, the speed $\vec{v}_{ap}$, or the acceleration $\vec{a}_{ap}$ according to a rule set in advance with the access point.

Step 404, the UE calculates the relative speed $\vec{v}_r = \vec{v}_{ue} - \vec{v}_{ap}$ between the current UE and the access point according to the locally measured speed $\vec{v}_{ue}$ of the UE and the received speed information $\vec{v}_{ap}$ of the access point.

Step 405, if the UE obtains the acceleration information $\vec{a}_{ap}$ of the access point, the UE may predict the relative speed $\vec{v}_r = \vec{v}_{ue} - \left(\vec{v}_{ap} + \vec{a}_{ap}\Delta t\right)$ at a future moment $\Delta t$ according to the acceleration information.

In an embodiment of the present invention, in Step 402, $IV_{change}=1$ indicates that the speed is changed, while $IV_{change} = 0$ indicates that the speed is not changed, and only when $IV_{change}=1$, the access point broadcasts the speed and the acceleration information on a high-speed channel. The access point may also periodically broadcast the speed and the acceleration information on a low-speed channel without reference to the value of $IV_{change}$.

In an embodiment of the present invention, in Step 402, when measuring the access point for the first time, the UE receives the information $IV_{change}$ indicating whether the speed is changed. If the information $IV_{change}$ indicates that the speed is changed, the terminal immediately receives the speed $\vec{v}_{ap}$ and the acceleration information $\vec{a}_{ap}$ on the high-speed channel and then saves the speed $\vec{v}_{ap}$ and the acceleration information $\vec{a}_{ap}$; otherwise, the terminal receives the speed $\vec{v}_{ap}$ and the acceleration information $\vec{a}_{ap}$ on the low-speed channel and then saves the speed $\vec{v}_{ap}$ and the acceleration information $\vec{a}_{ap}$.

After the first time of receiving, the UE periodically receives the information $IV_{change}$ indicating whether the speed is changed, and only when the information indicates that the speed is changed, the UE again receives a new speed and new acceleration information on the high-speed channel.

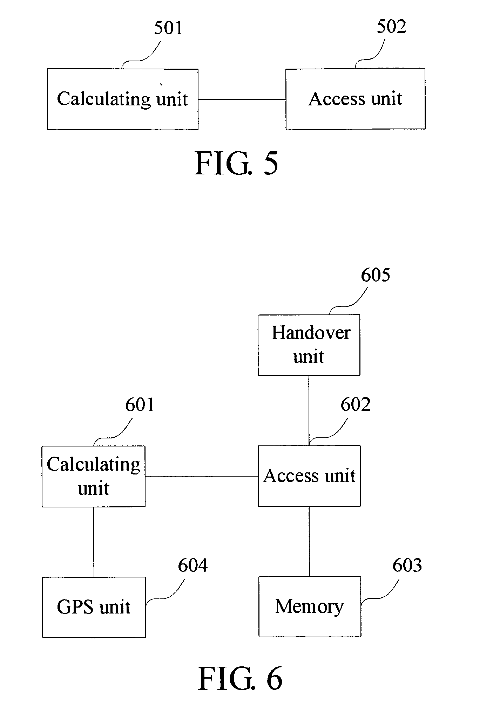

FIG 5 is a structural view of an embodiment of a UE according to the present invention. The UE includes a calculating unit 501 and an access unit 502.

The calculating unit 501 is configured to calculate a relative speed $V_r$ between the UE and each access point.

The access unit 502 is configured to select a access point having the $V_r$ smaller than or equal to a threshold $V_0$ to access.

Through the above embodiments, the UE can select the access point having an appropriate relative speed to access, so as to reduce access failures in the scenario of a mobile access point.

FIG 6 is a schematic structural view of another embodiment of a UE according to the present invention.

In this embodiment, the UE includes a calculating unit 601 and an access unit 602.

The calculating unit 601 is configured to calculate a relative speed $V_r$ between the UE and each access point.

The access unit 602 is configured to select the access point having the $V_r$ smaller than or equal to a threshold $V_0$ to access.

The UE further includes a memory 603, configured to store the preset $V_0$.

In an embodiment of the present invention, the calculating unit 601 is further configured to measure Doppler frequency shifts of signals sent by each access point, and obtains the $V_r$.

In an embodiment of the present invention, the UE further includes a Global Positioning System (GPS) unit 604, configured to transmit speed information of the UE to the calculating unit 601, and the calculating unit 601 is further configured to calculate the relative speed $V_r$ according to the speed information collected by the GPS unit of the UE and a GPS unit of the access point.

In an embodiment of the present invention, when the UE and the access points are in a non-connected state, if the relative speeds $V_r$ between the UE and a plurality of access points are all smaller than or equal to the threshold $V_0$, the access unit 602 is further configured to select the access point having a maximum signal intensity from the plurality of access points to access.

In an embodiment of the present invention, when the UE and the access points are in a non-connected state, if the relative speeds $V_r$ between the UE and all the access points are all greater than the threshold $V_0$, the access unit 602 is further configured to select the access point having the minimum $V_r$ to access.

In an embodiment of the present invention, the UE further includes a handover unit 605, configured to hand over the UE if the UE and a serving access point are in a connected state.

In an embodiment of the present invention, if the UE and a serving access point are in a connected state, and the $V_r$ between the UE and the serving access point in the connected state is greater than the threshold $V_0$, the handover unit 605 is configured to hand over the UE from the serving access point in the connected state to a neighboring access point having the $V_r$ smaller than or equal to the threshold $V_0$.

In an embodiment of the present invention, if the relative speed $V_r$ between the UE and each one of a plurality of neighboring access points is smaller than or equal to the threshold $V_0$, the access unit 602 is configured to select the access point having a maximum signal intensity from the plurality of neighboring access points, and the handover unit 605 is configured to hand over the UE to the access point; and if the relative speeds $V_r$ between the UE and all the access points are all greater than the threshold $V_0$, the handover unit 605 hands over the UE by using a delay and margin method.

In an embodiment of the present invention, if the UE and a serving access point are in a connected state, and the $V_r$ between the UE and the serving access point is smaller than or equal to the threshold $V_0$, the handover unit 605 hands over the UE by using a delay and margin method.

In an embodiment of an application scenario of the present invention, in a railway station, a train pulls over for ten minutes, and passengers are waiting on the platform or already boarded on the train. Some of the passengers may get on the train, then get off, and get on again. A mobile access point AP1 is installed on the train, and a fixed access point AP2 is installed on the platform.

Before the train is started, the UE receives broadcast messages sent by the ground access point and the mobile access point, and knows that a speed auxiliary handover decision standard is needed currently and $V_0$=5 km/h, so that the UE starts calculating the AP1 and the AP2. As the two access points are not moved, the UE actually selects the AP1 or the AP2 to access by using a conventional decision method based on the signal intensity. The UE on the train may select the AP2, and the UE on the platform may select the AP1.

After the train is started, the UE on the platform that accesses the AP1 soon calculates the relative speed between the UE and the AP1 being $V_r > 5$ km/h, and is immediately handed over from the AP1 to the AP2. In another aspect, the UE on the train that accesses the AP2 soon calculates the relative speed between the UE itself and the AP2 being $V_r > 5$ km/h, and is immediately handed over from the AP2 to the AP1.

In an embodiment of another application scenario of the present invention, in a railway station, passengers are waiting for a train T1 on the platform, and before the train T1 arrives, another train T2 passes by. A mobile AP1 is installed on the train, and a fixed AP2 is installed on the platform.

When the train T2 passes by the platform, a UE1 on the train T2 is about to access an access point, and the UE1 may detect that the signal intensities of the AP1 on the train and the AP2 on the platform both satisfy the access demand, but at the same time, the UE1 may detect that the relative speed between the UE1 and the AP1 satisfies the condition $V_r < 5$ km/h while the relative speed between the UE1 itself and the AP2 does not satisfy the condition, so that the UE1 selects the AP1 to access.

In addition, a UE2 on the platform is about to access an access point, the UE2 may detect that the signal intensities of the AP1 on the train and the AP2 on the platform both satisfy the access demand, but at the same time, the UE2 may detect that the relative speed between the UE2 and the AP2 satisfies the condition $V_r < 5$ km/h while the relative speed between the UE2 and the AP1 does not satisfy the condition, so that the UE2 selects the AP2 to access.

Through the embodiments of the above scenarios, it may solve the problem that after a large number of UEs access the access points, when the mobile access point starts to move from a static state, the UEs cannot be handed over from the mobile access point in time, and the UEs on the train that access the ground access point cannot be handed over to the mobile access point in time. In addition, the ground UEs are prevented from accessing the mobile access point on a transportation means passing by.

The present invention has the following beneficial effects. The UE accesses the access point according to the relative speeds between the UE and the access points. When the MRS starts moving, the ground terminal is handed over from the MRS in time, and the on-vehicle terminal is handed over to the MRS in time. It is ensured that the ground terminal does not access the moving MRS as possible, and during the movement, the on-vehicle terminal does not access the ground fixed base station or other neighboring MRSs as possible. In the region with dense users, for example, the platform, when all the access points are in a static state, it is ensured that the ping-pong handover of the user terminal is avoided.

Persons of ordinary skill in the art should understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as a ROM, a RAM, a magnetic disk, or a Compact Disk Read-Only Memory.

Detailed above are the objectives, technical solution and merits of the present invention. Although the invention has been described through several exemplary embodiments, the invention is not limited to such embodiments. Any modification, equivalent replacement, or improvement made without departing from principle of the present invention should fall within the scope of the present invention.

**Claims**

1. A method for a user equipment, UE, to access a wireless network, comprising calculating a relative speed $V_r$ between the UE and each of a plurality of access points (201); and the method is **characterized by** comprising: selecting an access point to access, wherein the relative speed $V_r$ between the UE and the access point is smaller than or equal to a threshold $V_0$ (202); and if the $V_r$ between the UE and each access point is greater than the threshold $V_0$, selecting, by the UE, an access point having the minimum $V_r$ to access.

2. The method according to claim 1, wherein before said calculating the relative speed $V_r$ between the UE and each of the plurality of the access points, further comprising:

   receiving, by the UE, broadcast information of each access point, and acquiring the threshold from the broadcast information; or
   storing a preset value as the threshold in the UE.

3. The method according to claim 2, wherein the broadcast information is sent by a mobile access point or a fixed access point, or is sent by the mobile access point and the fixed access point together.

4. The method according to claim 2, wherein each access point calculates the $V_0$ according to an average speed of all the UEs in the each access point coverage.

5. The method according to claim 1, wherein said calculating the relative speed $V_r$ between the UE and each access point comprises: calculating, by the UE, Doppler frequency shift of signal sent by each access point, and obtaining the $V_r$ according to the Doppler frequency shift.

6. The method according to claim 1, wherein said calculating the relative speed $V_r$ between the UE and each access point comprises: calculating, by the UE, the $V_r$ according to speed information collected by a global positioning system, GPS, of the UE and speed information collected by a GPS of each access point.

7. The method according to claim 1, wherein if the $V_r$ between the UE and each one of a plurality of access points is smaller than or equal to the threshold $V_0$, the UE selects the access point having a maximum signal intensity from the plurality of access points to access.

8. The method according to claim 1, wherein if the UE and a serving access point are in a connected state, and the $V_r$ between the UE and the serving access point is greater than the threshold $V_0$, wherein selecting a access point to access comprises:

   selecting, by the UE, a neighboring access point having the $V_r$ smaller than or equal to the threshold $V_0$ to hand over to from the serving access point.

9. The method according to claim 8, if the $V_r$ between the UE and each neighboring access point is smaller than or equal to the threshold $V_0$, wherein selecting a access point to access comprises:

   selecting, by the UE, a access point having a maximum signal intensity from the plurality of neighboring access points and is handed over to the access point.

10. The method according to claim 1, wherein if the UE and a serving access point are in a connected state, and the $V_r$ between the UE and the serving access point is smaller than or equal to the threshold $V_0$, the UE is handed over by using a delay and margin method.

11. A user equipment, UE, comprising a calculating unit (501), configured to calculate a relative speed $V_r$ between the UE and each access point; and the UE is **characterized by** comprising:

    an access unit (502), configured to select an access point to access if the $V_r$ between the UE and the access point is smaller than or equal to a threshold $V_0$; and if the relative speeds $V_r$ between the UE and all the access points are all greater than the threshold $V_0$, the access unit is further configured to select an access point having the minimum $V_r$ to access.

12. The UE according to claim 11, further comprising:

    a memory (603), configured to store preset value as threshold $V_0$.

13. The UE according to claim 11, further comprising:

a global positioning system, GPS, unit (604), configured to transmit speed information of the UE to the calculating unit, wherein the calculating unit is further configured to calculate the relative speed $V_r$ according to the speed information of the UE and speed information of each access point.

14. The UE according to claim 11, further comprising: a handover unit (605), configured to hand over the UE if the UE and the serving access point are in a connected state.

15. A computer readable storage medium storing program code thereon for use by a user equipment, UE, to access a wireless network, the program code comprising instructions for executing a method that comprises:

   calculating a relative speed $V_r$ between the UE and each of a plurality of access points; and
   selecting an access point to access, wherein the relative speed $V_r$ between the UE and the access point is smaller than or equal to a threshold $V_0$; and
   if the $V_r$ between the UE and each access point is greater than the threshold $V_0$, selecting an access point having the minimum $V_r$ to access.

16. The computer readable storage medium according to claim 15, wherein the program code comprising instructions for executing the method that further comprises:

   receiving, by the UE, broadcast information of each access point, and acquiring the threshold from the broadcast information; or
   storing a preset value as the threshold in the UE.

17. The computer readable storage medium according to claim 15 or 16, wherein said calculating the relative speed $V_r$ between the UE and each access point comprises: calculating, by the UE, Doppler frequency shift of signal sent by each access point, and obtaining the $V_r$ according to the Doppler frequency shift.

18. The computer readable storage medium according to claim 15 or 16, wherein said calculating the relative speed $V_r$ between the UE and each access point comprises: calculating, by the UE, the $V_r$ according to speed information collected by a global positioning system, GPS, of the UE and speed information collected by a GPS of each access point.

**Patentansprüche**

1. Verfahren für ein Benutzergerät (User Equipment), UE, um auf ein drahtloses Netzwerk zuzugreifen, umfassend:

   Berechnen einer Relativgeschwindigkeit $V_r$ zwischen dem UE und jedem einer Mehrzahl von Zugangspunkten (201); und das Verfahren ist **gekennzeichnet dadurch, dass** es umfasst: Auswählen eines Zugangspunkts für den Zugriff, wobei die Relativgeschwindigkeit $V_r$ zwischen dem UE und dem Zugangspunkt kleiner oder gleich einem Schwellenwert $V_0$ ist (202); und
   falls die $V_r$ zwischen dem UE und jedem Zugriffspunkt größer ist als der Schwellenwert $V_0$, Auswählen, durch das UE, eines Zugangspunkts mit der kleinsten $V_r$ für den Zugriff.

2. Verfahren nach Anspruch 1, wobei, vor der Berechnung der Relativgeschwindigkeit $V_r$ zwischen dem UE und jedem der Vielzahl der Zugangspunkte, das Verfahren weiterhin umfasst:

   Empfangen, durch das UE, von Rundsendeinformationen von jedem Zugangspunkt und Beschaffen des Schwellenwerts anhand der Rundsendeinformationen; oder
   Speichern eines vorbestimmten Werts als Schwellenwert im UE.

3. Verfahren nach Anspruch 2, wobei die Rundsendeinformationen von einem mobilen Zugangspunkt oder einem ortsfesten Zugangspunkt gesendet werden oder von dem mobilen Zugangspunkt und dem ortsfesten Zugangspunkt gemeinsam gesendet werden.

4. Verfahren nach Anspruch 2, wobei jeder Zugangspunkt die $V_0$ entsprechend einer mittleren Geschwindigkeit aller UEs im Versorgungsbereich jedes Zugangspunkts berechnet.

5. Verfahren nach Anspruch 1, wobei die Berechnung der Relativgeschwindigkeit $V_r$ zwischen dem UE und jedem Zugangspunkt umfasst: Berechnen, durch das UE, einer Doppler-Frequenzverschiebung des Signals, das von jedem Zugangspunkt gesendet wird, und Erhalten der $V_r$ gemäß der Doppler-Frequenzverschiebung.

6. Verfahren nach Anspruch 1, wobei die Berechnung der Relativgeschwindigkeit $V_r$ zwischen dem UE und jedem Zugangspunkt umfasst: Berechnen, durch das UE, der Vr entsprechend Geschwindigkeitsinformationen des UE, die von einem globalen Positionierungssystem, GPS, erfasst werden, und Geschwindigkeitsinformationen jedes Zugangspunkts, die von einem GPS erfasst werden.

7. Verfahren nach Anspruch 1, wobei, falls die $V_r$ zwischen dem UE und jedem einer Vielzahl von Zugangspunkten kleiner oder gleich dem Schwellenwert $V_0$ ist, das UE den Zugangspunkt mit einer maximalen Signalintensität aus der Mehrzahl von Zugangspunkten für den Zugriff auswählt.

8. Verfahren nach Anspruch 1, wobei, falls das UE und ein bedienender Zugangspunkt in einem verbundenen Zustand sind und die $V_r$ zwischen dem UE und dem bedienenden Zugangspunkt größer ist als der Schwellenwert $V_0$, das Auswählen eines Zugangspunkts für den Zugriff umfasst:

Auswählen, durch das UE, eines Nachbarzugangspunkts mit einer $V_r$ kleiner oder gleich dem Schwellenwert $V_0$, an den von dem bedienenden Zugangspunkt zu übergeben ist.

9. Verfahren nach Anspruch 8, wobei, falls die $V_r$ zwischen dem UE und jedem Nachbarzugangspunkt kleiner oder gleich dem Schwellenwert $V_0$ ist, das Auswählen eines Zugangspunkts für den Zugriff umfasst:

Auswählen, durch das UE, eines Zugangspunkts mit einer maximalen Signalintensität aus der Mehrzahl von benachbarten Zugangspunkten und Übergeben des UEs an den Zugangspunkt.

10. Verfahren nach Anspruch 1, wobei, falls das UE und ein bedienender Zugangspunkt in einem verbundenen Zustand sind und die $V_r$ zwischen dem UE und dem bedienenden Zugangspunkt kleiner oder gleich dem Schwellenwert $V_0$ ist, das UE mithilfe einer Verzögerungs- und Margenmethode übergeben wird.

11. Benutzergerät, UE, umfassend eine Berechnungseinheit (501), die dafür ausgelegt ist, eine Relativgeschwindigkeit $V_r$ zwischen dem UE und jedem Zugangspunkt zu berechnen; und das UE ist **gekennzeichnet dadurch, dass** es umfasst:

eine Zugriffseinheit (502), die dafür ausgelegt ist, einen Zugriffspunkt für den Zugriff auszuwählen, falls die $V_r$ zwischen dem UE und dem Zugangspunkt kleiner oder gleich einem Schwellenwert $V_0$ ist; und, falls die Relativgeschwindigkeiten $V_r$ zwischen dem UE und allen Zugriffspunkten alle größer sind als der Schwellenwert $V_0$, ist die Zugriffseinheit ferner dafür ausgelegt, einen Zugriffspunkt mit der kleinsten $V_r$ für den Zugriff auszuwählen.

12. UE nach Anspruch 11, ferner umfassend:

einen Speicher (603), der dafür ausgelegt ist, einen voreingestellten Wert als Schwellenwert $V_0$ zu speichern.

13. UE nach Anspruch 11, ferner umfassend:

eine GPS-Einheit (globales Positionierungssystem) (604), die dafür ausgelegt ist, Geschwindigkeitsinformationen des UE an die Berechnungseinheit zu übermitteln, wobei die Berechnungseinheit ferner dafür ausgelegt ist, die Relativgeschwindigkeit $V_r$ gemäß den Geschwindigkeitsinformationen des UE und Geschwindigkeitsinformationen von jedem Zugriffspunkt zu berechnen.

14. UE nach Anspruch 11, ferner umfassend: eine Übergabeeinheit (605), die dafür ausgelegt ist, das UE zu übergeben, falls das UE und der bedienende Zugangspunkt in einem verbundenen Zustand sind.

15. Computerlesbares Speichermedium, auf dem Programmcode gespeichert ist, zur Verwendung durch ein Benutzergerät, UE, um auf ein drahtloses Netzwerk zuzugreifen, wobei der Programmcode Instruktionen umfasst zur Ausführung eines Verfahrens, das umfasst:

Berechnen einer Relativgeschwindigkeit $V_r$ zwischen dem UE und jedem einer Mehrzahl von Zugangspunkten;

und

Auswählen eines Zugangspunkts für den Zugriff, wobei die Relativgeschwindigkeit $V_r$ zwischen dem UE und dem Zugangspunkt kleiner oder gleich einem Schwellenwert $V_0$ ist; und

falls die $V_r$ zwischen dem UE und jedem Zugriffspunkt größer ist als der Schwellenwert $V_0$, Auswählen eines Zugangspunkts mit der kleinsten $V_r$ für den Zugriff.

16. Computerlesbares Speichermedium nach Anspruch 15, wobei der Programmcode Instruktionen umfasst zur Ausführung eines Verfahrens, das ferner umfasst:

Empfangen, durch das UE, von Rundsendeinformationen von jedem Zugangspunkt und Beschaffen des Schwellenwerts anhand der Rundsendeinformationen; oder
Speichern eines vorbestimmten Werts als Schwellenwert im UE.

17. Computerlesbares Speichermedium nach Anspruch 15 oder 16, wobei die Berechnung der Relativgeschwindigkeit $V_r$ zwischen der UE und jedem Zugangspunkt umfasst: Berechnen, durch das UE, einer Doppler-Frequenzverschiebung des Signals, das von jedem Zugangspunkt gesendet wird, und Erhalten der $V_r$ gemäß der Doppler-Frequenzverschiebung.

18. Computerlesbares Speichermedium nach Anspruch 15 oder 16, wobei die Berechnung der Relativgeschwindigkeit $V_r$ zwischen dem UE und jedem Zugangspunkt umfasst: Berechnen, durch das UE, der $V_r$ entsprechend Geschwindigkeitsinformationen des UE, die von einem globalen Positionierungssystem, GPS, erfasst werden, und Geschwindigkeitsinformationen jedes Zugangspunkts, die von einem GPS erfasst werden.

## Revendications

1. Procédé permettant à un équipement utilisateur, UE, d'accéder à un réseau sans fil, le procédé comprenant l'étape consistant à :

calculer une vitesse relative $V_r$ entre l'UE et chacun d'une pluralité de points d'accès (201) ; et **caractérisé en ce qu'**il comprend les étapes consistant à : sélectionner un point d'accès auquel accéder, la vitesse relative $V_r$ entre l'UE et le point d'accès étant inférieure ou égale à un seuil $V_0$ (202) ; et
si la $V_r$ entre l'UE et chaque point d'accès est supérieure au seuil $V_0$, sélectionner, par l'UE, un point d'accès de $V_r$ minimale auquel accéder.

2. Procédé selon la revendication 1, comprenant en outre, préalablement à ladite étape consistant à calculer la vitesse relative $V_r$ entre l'UE et chacun de la pluralité de points d'accès, l'étape consistant à :

recevoir, par l'UE, des informations à diffusion large de chaque point d'accès et acquérir le seuil à partir des informations à diffusion large ; ou
enregistrer dans l'UE une valeur préétablie représentant le seuil.

3. Procédé selon la revendication 2, dans lequel les informations à diffusion large sont envoyées par un point d'accès mobile ou un point d'accès fixe, ou sont envoyées conjointement par le point d'accès mobile et le point d'accès fixe.

4. Procédé selon la revendication 2, dans lequel chaque point d'accès calcule le seuil $V_0$ en fonction d'une vitesse moyenne de l'ensemble des UE dans la zone de couverture de chaque point d'accès.

5. Procédé selon la revendication 1, dans lequel ladite étape consistant à calculer la vitesse relative $V_r$ entre l'UE et chaque point d'accès comprend l'étape consistant à :

calculer, par l'UE, un décalage Doppler d'un signal envoyé par chaque point d'accès, et obtenir la $V_r$ en fonction du décalage Doppler.

6. Procédé selon la revendication 1, dans lequel ladite étape consistant à calculer la vitesse relative $V_r$ entre l'UE et chaque point d'accès comprend l'étape consistant à :

calculer, par l'UE, la $V_r$ en fonction d'informations de vitesse recueillies par un système mondial de localisation, GPS, de l'UE et d'informations de vitesse recueillies par un GPS de chaque point d'accès.

7. Procédé selon la revendication 1, dans lequel, si la $V_r$ entre l'UE et chacun d'une pluralité de points d'accès est inférieure ou égale au seuil $V_0$, l'UE sélectionne, parmi la pluralité de points d'accès, le point d'accès d'intensité de signal maximale auquel accéder.

8. Procédé selon la revendication 1, dans lequel, si l'UE et un point d'accès de desserte sont connectés, et la $V_r$ entre l'UE et le point d'accès de desserte est supérieure au seuil $V_0$, l'étape consistant à sélectionner un point d'accès auquel accéder comprend l'étape consistant à :

sélectionner, par l'UE, un point d'accès voisin dont la $V_r$ est inférieure ou égale au seuil $V_0$ pour effectuer un transfert depuis le point d'accès de desserte.

9. Procédé selon la revendication 8, dans lequel, si la $V_r$ entre l'UE et chaque point d'accès voisin est inférieure ou égale au seuil $V_0$, l'étape consistant à sélectionner un point d'accès auquel accéder comprend l'étape consistant à :

sélectionner, par l'UE, parmi la pluralité de points d'accès voisins, un point d'accès d'intensité de signal maximale et transférer l'UE vers le point d'accès.

10. Procédé selon la revendication 1, dans lequel, si l'UE et un point d'accès de desserte sont connectés, et la $V_r$ entre l'UE et le point d'accès de desserte est inférieure ou égale au seuil $V_0$, l'UE est transféré à l'aide d'une méthode à délai et marge.

11. Equipement utilisateur, UE, comprenant une unité de calcul (501), configurée pour calculer une vitesse relative $V_r$ entre l'UE et chacun point d'accès ; et **caractérisé en ce qu'**il comprend :

une unité d'accès (502), configurée pour sélectionner un point d'accès auquel accéder si la $V_r$ entre l'UE et le point d'accès est inférieure ou égale à un seuil $V_0$ ; et configurée en outre, si les vitesses relatives $V_r$ entre l'UE et l'ensemble des points d'accès sont toutes supérieures au seuil $V_0$, pour sélectionner un point d'accès de $V_r$ minimale auquel accéder.

12. UE selon la revendication 11, comprenant en outre :

une mémoire (603), configurée pour enregistrer une valeur préétablie représentant le seuil $V_0$.

13. UE selon la revendication 11, comprenant en outre :

une unité de système mondial de localisation, GPS, (604), configurée pour transmettre des informations de vitesse de l'UE à l'unité de calcul, l'unité de calcul étant configurée en outre pour calculer la vitesse relative $V_r$ en fonction des informations de vitesse de l'UE et d'informations de vitesse de chaque point d'accès.

14. UE selon la revendication 11, comprenant en outre : une unité de transfert (605), configurée pour transférer l'UE si l'UE et le point d'accès de desserte sont connectés.

15. Support d'enregistrement lisible par ordinateur sur lequel est enregistré un code de programme destiné à être utilisé par un équipement utilisateur, UE, pour accéder à un réseau sans fil, le code de programme comprenant des instructions permettant l'exécution d'un procédé qui comprend les étapes consistant à :

calculer une vitesse relative $V_r$ entre l'UE et chacun d'une pluralité de points d'accès ; et
sélectionner un point d'accès auquel accéder, la vitesse relative $V_r$ entre l'UE et le point d'accès étant inférieure ou égale à un seuil $V_0$ ; et
si la $V_r$ entre l'UE et chaque point d'accès est supérieure au seuil $V_0$, sélectionner un point d'accès de $V_r$ minimale auquel accéder.

16. Support d'enregistrement lisible par ordinateur selon la revendication 15, dans lequel le code de programme comprend des instructions permettant l'exécution du procédé comprenant en outre l'étape consistant à :

recevoir, par l'UE, des informations à diffusion large de chaque point d'accès et acquérir le seuil à partir des informations à diffusion large ; ou
enregistrer dans l'UE une valeur préétablie représentant le seuil.

17. Support d'enregistrement lisible par ordinateur selon la revendication 15 ou 16, dans lequel ladite étape consistant à calculer la vitesse relative $V_r$ entre l'UE et chaque point d'accès comprend l'étape consistant à : calculer, par l'UE, un décalage Doppler d'un signal envoyé par chaque point d'accès, et obtenir la $V_r$ en fonction du décalage Doppler.

18. Support d'enregistrement lisible par ordinateur selon la revendication 15 ou 16, dans lequel ladite étape consistant à calculer la vitesse relative $V_r$ entre l'UE et chaque point d'accès comprend l'étape consistant à : calculer, par l'UE, la $V_r$ en fonction d'informations de vitesse recueillies par un système mondial de localisation, GPS, de l'UE et d'informations de vitesse recueillies par un GPS de chaque point d'accès.

Speed V

BS1

MRS

**FIG. 1**

| | |
|---|---|
| Calculate a relative speed $V_r$ between the UE and each of a plurality of access points | 201 |

| | |
|---|---|
| Select an Access point to access, wherein the relative speed $V_r$ between the UE and the access point is Smaller than or equal to a threshold $V_0$ | 202 |

**FIG. 2**

Measure a signal intensity of each access point and a relative speed between the UE and each access point when the UE is in a non-connected state _301_

Obtain state information of each measured access point by the UE according to a measurement result, and classifies the access points into different sets according to the state information _302_

303

Detect whether a set $A_3$ is null ——No

Yes

304

Select the AP having the maximum signal intensity from the set $A_3$, and access the AP

307

Continue to measure ◄—Yes— Detect whether a set $A_2$ is null 305

No

306

Select an access point having the minimum relative speed $V_r$ from the set $A_2$, and access the access point

FIG. 3

The UE and the access point having a GPS function respectively perform a self-speed measurement according to received GPS signals. 401

The access point broadcasts information $IV_{change}$ indicating whether the speed of the access point is changed and specific speed $\vec{v}_{ap}$ information to the UE according to an event trigger or a timely trigger mode. 402

The UE receives the information indicating whether the speed is changed, the speed, or the acceleration according to a rule set in advance with the access point. 403

Speed

Acceleration

The UE calculates the relative speed between the current UE and the access point according to the locally measured speed of the UE and the received speed information of the access point . 404

The relative speed at a future moment is predicted according to the acceleration information. 405

# FIG. 4

501

502

Calculating unit — Access unit

## FIG. 5

605

Handover unit

601

602

Calculating unit — Access unit

604

603

GPS unit

Memory

## FIG. 6

**EP 2 424 321 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007121414 A2